# EUROPÄISCHE PATENTANMELDUNG

(11) **EP 0 911 564 A2**
(43) Veröffentlichungstag der Anmeldung: **28.04.1999**
(21) Anmeldenummer: 98119269.3
(22) Anmeldetag: 13.10.1998
(51) Int. Cl.: F16L 3/26

(54) **Montageschiene**

(30) Priorität: 24.10.1997 AT 660/97 U
(71) Anmelder: Kasper, Helmut, 6850 Dornbirn (AT)
(72) Erfinder: Kasper, Helmut, 6850 Dornbirn (AT)
(74) Vertreter: Hefel, Herbert, Dipl.-Ing.

(57) **Zusammenfassung**

Die Montageschiene dient zur Festlegung von Kabeln, Rohren, Elektrorohren o. dgl. Sie besteht aus einer im Querschnitt U-förmigen Profilschiene (1). An den Längsrändern der durch einen Steg (2) miteinander verbundenen Wangen (3) sind jeweils beidseitig auskragende Flansche (4, 40) angeordnet. Die nach außen auskragenden Flansche (40) weisen von ihren Längsrändern ausgehende Einschnitte (7) auf. Sowohl die Ränder (5) der nach außen wie auch die Ränder (6) der zur Längsmittelebene der Montageschiene auskragenden Flansche (4, 40) sind umgebördelt. Die umgebördelten Ränder (5, 6) sind gegen eine den die Wangen (3) verbindenden Steg (2) beinhaltende Ebene gerichtet. Die quer zur Längsachse der Montageschiene gemessene Tiefe der Einschnitte (7) ist größer als die Breite (C) des umgebördelten Randes (5). Die Tiefe der Einschnitte (7) reicht bis zu den Wangen (3).

## Beschreibung

Die Erfindung bezieht sich auf eine Montageschiene, insbesondere zur Festlegung von Kabeln, Rohren, Elektrorohren o. dgl., bestehend aus einer im Querschnitt U-förmigen Profilschiene, wobei an den Längsrändern der durch einen Steg miteinander verbundenen Wangen jeweils beidseitig auskragende Flansche angeordnet sind und die nach außen auskragenden Flansche von ihren Längsrändern ausgehende Einschnitte aufweisen.

Montageschienen der verschiedensten Art sind bekannt. Eine bekannte Montageschiene zur Befestigung von mehreren Kabeln nach der DE-PS 675 892 besteht aus einem in der Längsrichtung umgebogenen Blechstreifen, der an der Auflagestelle der Kabel kammartig mit Zähnen versehen ist, an welchen das oder die Kabel befestigt werden. Die Zähne sind an den jeweiligen Enden verbreitert.

Bei einer anderen Montageschiene nach der DE-OS 2 164 991 sind Tragflansche vorgesehen. An jedem der an den Flanken der Montageschiene umgebördelten und etwa parallel zu dem Schienenboden verlaufenden Tragflansche ist je ein weiterer sich etwa rechtwinkelig zu dem Schienenboden und auch nach diesem hin erstreckender Halteflansch ausgebildet. In diesem Halteflansch sind in Abständen Einschnitte zur Aufnahme von Halteorganen vorgesehen.

Eine damit unmittelbar vergleichbare Montageschiene zeigt auch die CH-PS 348 737, bei welcher jedoch die Tragflansche mit Einschnitten versehen sind und diese Tragflansche sich im wesentlichen parallel zum Boden der Schiene erstrecken oder etwas gegen diesen geneigt sind.

Die Montageschiene nach der US-PS 3 132 831 besitzt einen U-förmigen Querschnitt. Von den Rändern der Wangen dieser U-förmigen Montageschiene gehen Einschnitte aus. Die oberen Abschnitte der Stege, die diese Einschnitte begrenzen, sind verbreitert. Diese verbreiterten Abschnitte sind darüberhinaus gewölbt.

Schlußendlich ist vor allem noch die Montageschiene nach der EU-PS 555 187 B1 zu erwähnen, von welcher die gegenständliche Erfindung unmittelbar ausgegangen ist. Die Erfindung zielt darauf ab, diese letzterwähnte vorbekannte Schiene zu verbessern, d.h. sie so auszugestalten, daß die Montagemöglichkeiten vereinfacht werden und darüberhinaus in diese Montageschiene unterschiedliche Befestigungsarmaturen eingebracht werden können, mit welchen die Kabel, Rohre, Elektrorohre o. dgl. fixierbar sind. Die Lösung dieser Aufgabe besteht darin, daß die Ränder sowohl der nach außen, wie auch die Ränder der zur Längsmittelebene der Montageschiene auskragenden Flansche umgebördelt sind, daß die umgebördelten Ränder gegen eine den die Wangen verbindenden Steg beinhaltende Ebene gerichtet sind.

Die Zeichnung veranschaulicht die Erfindung anhand mehrerer Ausführungsbeispiele. Es zeigen:
- Fig. 1: eine Schrägsicht einer ersten Ausführungsform und
- Fig. 2: die Ansicht der Schiene nach Fig. 1;
- die Fig. 3 bis 6: Ansichten wie Fig. 2 von Montageschienen, wobei jedoch deren Abmessungsverhältnisse unterschiedlich gewählt sind;
- Fig. 7: ein Montagebeispiel.

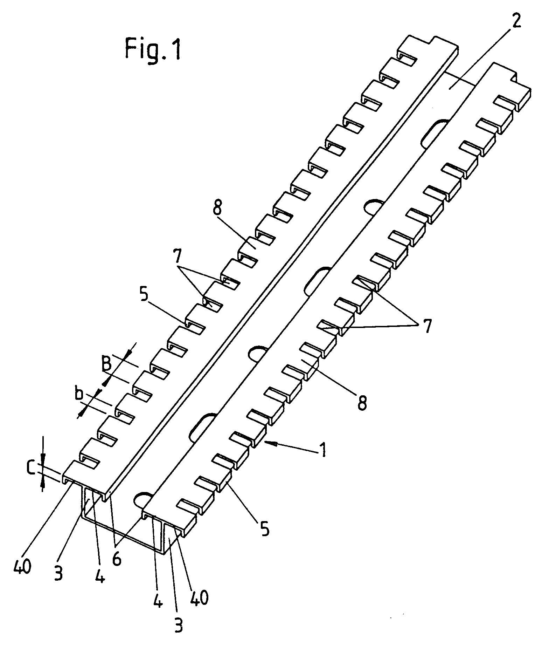

Die Montageschiene nach Fig. 1 besteht aus einer im Querschnitt U-förmigen Profilschiene. An den Längsrändern der durch einen Steg 2 miteinander verbundenen Wangen 3 sind jeweils beidseitig auskragende Flansche 4, 40 vorgesehen. Die Ränder 5 sowohl der nach außen auskragenden Flansche 40 wie auch die Ränder 6 der zur Längsmittelebene der Montageschiene auskragenden Flansche 4 sind umgebördelt. Diese umgebördelten Ränder 5, 6 sind gleichgerichtet und im wesentlichen parallel, und zwar gegen eine den die Wangen 3 verbindenden Steg 2 beinhaltende Ebene. Aus den Figuren ist ersichtlich, daß die Ränder 5, 6 im wesentlichen parallel verlaufen. Es ist denkbar und liegt im Rahmen der Erfindung, die Montageschiene so auszugestalten, daß die Ränder 5, 6 jeweils paarweise gegen die den Steg 2 beinhaltende Ebene konvergieren.

Von den Rändern gehen Einschnitte 7 aus. Die quer zur Längsachse der Montageschiene gemessene Tiefe der Einschnitte 7 ist dabei größer als die Breite C des umgebördelten Randes 5. Die Tiefe der Einschnitte 7 reicht dabei zweckmäßigerweise bis zu den Wangen 3.

Aus Fig. 1 ist ferner ersichtlich, daß die Breite b der erwähnten Einschnitte 7 kleiner ist als die Breite B der zwischen benachbarten Einschnitten 7 verbliebenen Lasche 8.

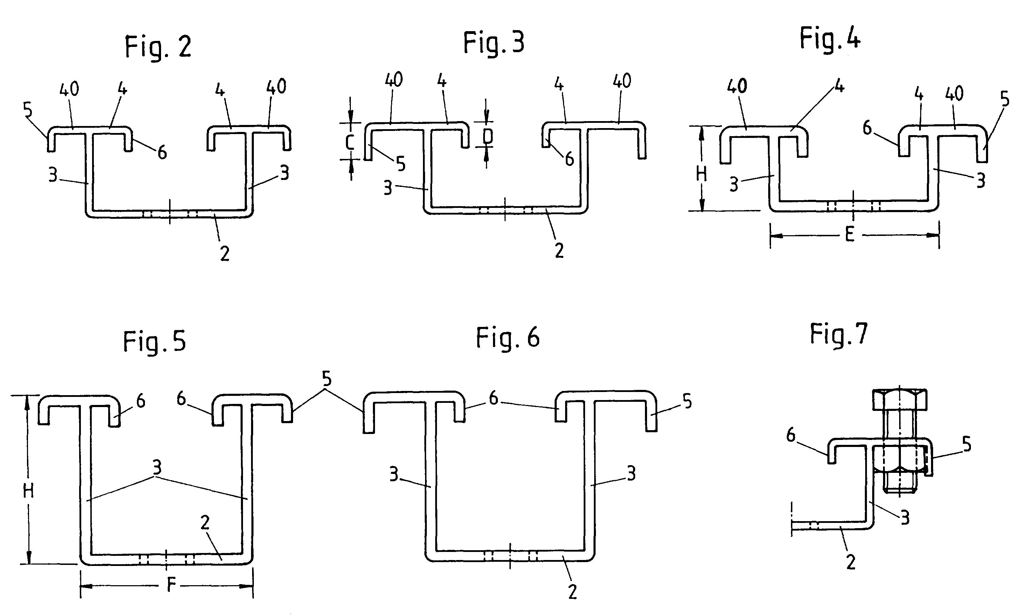

Die Breite der beiden Flansche 4, 40, die vom Rand einer Wange 3 seitlich auskragen, kann gleich sein, so daß die Querschnitte der Wangen 3 und der von ihnen ausgehenden Flansche 4, 40 eine die Wangen 3 beinhaltende Symmetrieachse aufweisen (Fig. 2).

Bei einer anderen Ausführung sind die Breiten der von einer Wange 3 ausgehenden beiden Flansche 4, 40 unterschiedlich groß. Zweckmäßig ist dabei der nach außen auskragende Flansch 40 breiter als der gegen die Längsmittelebene der Montageschiene auskragende Flansch 4 (Fig. 3, Fig. 4). Die Breiten C, D der umgebördelten Ränder 5, 6 der Flansche 4, 40 können gleich groß sein oder aber auch unterschiedlich groß, wie Fig. 3 zeigt. Die von Wange 3 zu Wange 3 gemessene Breite E der Montageschiene kann größer sein als deren Höhe H (Fig. 3 und Fig. 4), aber auch kleiner (Fig. 5, Fig. 6). Diese unterschiedlichen Abmessungsverhältnisse dienen dazu, die Montageschiene der jeweiligen Aufgabe so optimal wie möglich anzupassen.

Die durch die umgebördelten Ränder 5, 6 zusammen mit den jeweiligen Wangen 3 gebildeten Kanäle sind dabei zweckmäßigerweise so bemessen, daß in ihnen Normmuttern verdrehsicher gehalten werden können (Fig. 7). Im übrigen sind an der neuen Montageschiene Beschläge der herkömmlichen Art einsetzbar. Im Steg 2 sind noch Öffnungen ausgespart, zweckmäßigerweise Langlochöffnungen, diese dienen der Aufnahme von Befestigungsmitteln, mit welchen die Montageschiene an einem Traggestell oder an einem Tragrahmen oder an einer Tragwand festgelegt werden kann. Die Beschläge, die bei solchen Montageschienen eingesetzt werden, sind im wesentlichen bekannt und brauchen daher hier nicht weiter dargestellt und geoffenbart zu werden. Zum Teil handelt es sich um in sich starre Bügel, die einhängbar gestaltet sind oder um Lochbänder, die mit Schrauben und Muttern an der Montageschiene befestigt werden.

### Legende zu den Hinweisziffern:

- 1: Profilschiene
- 2: Steg
- 3: Wange
- 4, 40: Flansch
- 5: Rand
- 6: Rand
- 7: Einschnitt
- 8: Lasche

## Patentansprüche

1. Montageschiene, insbesondere zur Festlegung von Kabeln, Rohren, Elektrorohren o. dgl., bestehend aus einer im Querschnitt U-förmigen Profilschiene (1), wobei an den Längsrändern der durch einen Steg (2) miteinander verbundenen Wangen (3) jeweils beidseitig auskragende Flansche (4, 40) angeordnet sind und die nach außen auskragenden Flansche (40) von ihren Längsrändern ausgehende Einschnitte (7) aufweisen, dadurch gekennzeichnet, daß die Ränder (5) sowohl der nach außen, wie auch die Ränder (6) der zur Längsmittelebene der Montageschiene auskragenden Flansche (4, 40) umgebördelt sind, daß die umgebördelten Ränder (5, 6) gegen eine den die Wangen (3) verbindenden Steg (2) beinhaltende Ebene gerichtet sind.

2. Montageschiene nach Anspruch 1, dadurch gekennzeichnet, daß die quer zur Längsachse der Montageschiene gemessene Tiefe der Einschnitte (7) größer ist als die Breite (C) des umgebördelten Randes (5).

3. Montageschiene nach Anspruch 2, dadurch gekennzeichnet, daß die Tiefe der Einschnitte (7) bis zu den Wangen (3) reicht.

4. Montageschiene nach Anspruch 1, dadurch gekennzeichnet, daß die Breite (b) der Einschnitte (7) kleiner ist als die Breite (B) der zwischen benachbarten Einschnitten (7) verbliebenen Lasche (8) (Fig. 1).

5. Montageschiene nach Anspruch 1, dadurch gekennzeichnet, daß die Querschnitte der Wangen (3) und der von ihnen ausgehenden Flansche (4, 40) eine die Wangen (3) beinhaltende Symmetrieachse aufweisen (Fig. 2).

6. Montageschiene nach Anspruch 1, dadurch gekennzeichnet, daß die Breiten der von einer Wange (3) ausgehenden beiden Flansche (4, 40) unterschiedlich groß sind (Fig. 3 und Fig. 4).

7. Montageschiene nach Anspruch 6, dadurch gekennzeichnet, daß der nach außen auskragende Flansch (40) breiter ist als der gegen die Längsmittelebene der Montageschiene auskragende Flansch (4) (Fig. 3 und Fig. 4).

8. Montageschiene nach einem der Ansprüche 1 bis 7, dadurch gekennzeichnet, daß die Breiten (C, D) der umgebördelten Ränder (5, 6) der Flansche (4, 40) unterschiedlich groß sind (Fig. 3).

9. Montageschiene nach Anspruch 1, dadurch gekennzeichnet, daß die von Wange (3) zu Wange (3) gemessene Breite (E) der Montageschiene größer ist als deren Höhe (H) (Fig. 3 und Fig. 4).

10. Montageschiene nach Anspruch 1, dadurch gekennzeichnet, daß die von Wange (3) zu Wange (3) gemessene Breite (F) der Montageschiene kleiner ist als deren Höhe (H) (Fig. 5 und Fig. 6).

11. Montageschiene nach Anspruch 1, dadurch gekennzeichnet, daß die umgebördelten Ränder (5, 6) etwa parallel zueinander liegen.

12. Montageschiene nach Anspruch 1, dadurch gekennzeichnet, daß die umgebördelten Ränder (5, 6) der Flansche (4, 40) paarweise gegen eine den Steg (2) beinhaltende Ebene konvergieren.
